# EUROPÄISCHE PATENTSCHRIFT

(11) **EP 0 489 314 B1**
(45) Veröffentlichungstag und Bekanntmachung des Hinweises auf die Patenterteilung: **10.04.1996**
(21) Anmeldenummer: 91119901.6
(22) Anmeldetag: 22.11.1991
(51) Int. Cl.: C08F 214/18, C08F 2/38

(54) **Unvernetzte Copolymerisate mit reaktiven Doppelbindungen aus Fluormonomeren und Alkenyl-(iso)cyanuraten**
Non-crosslinked copolymers with reactive double bonds made of fluoro monomers and alcenyl-(iso)cyanurates
Copolymérisats non réticulés avec doubles liaisons réactives de monomères fluorés et d'(iso)cyanurates d'alcenyl

(30) Priorität: 04.12.1990 DE 4038588
(43) Veröffentlichungstag der Anmeldung: 10.06.1992
(73) Patentinhaber: BAYER AG, D-51368 Leverkusen (DE)
(72) Erfinder: Krüger, Ralf, Dr., W-5060 Bergisch Gladbach 1 (DE); Piejko, Karl-Erwin, Dr., W-5060 Bergisch Gladbach 2 (DE); Langstein, Gerhard, Dr., W-5067 Kürten-Biesfeld (DE)

(56) Entgegenhaltungen:
- EP-A- 0 137 216

## Beschreibung

Die vorliegende Erfindung betrifft Fluorcopolymere mit reaktiven ungesättigten Seitengruppen und ein Verfahren zu ihrer Herstellung.

Fluorpolymere werden in der Technik immer dann eingesetzt, wenn besondere Eigenschaften, wie niedrige Oberflächenspannung, hohe Chemikalienbeständigkeit oder extreme Anforderungen an die Alterungsstabilität verlangt werden. Für viele Einsatzzwecke werden die Fluorpolymere während oder nach der Formgebung vernetzt, wie beispielsweise bei einer Verwendung auf dem Kautschukgebiet. Diese Vernetzungsreaktionen benötigen im Falle nicht modifizierter Fluorelastomere, die also keine besonderen Reaktivstellen enthalten, drastische Bedingungen, wodurch die Vernetzung schwierig zu steuern ist und Schädigungen des Fluorpolymers auftreten können. Um dies zu vermeiden, führt man Reaktivstellen, sogenannte Cure-sites, in die Polymerketten ein, an denen selektiv und unter milderen Bedingungen vernetzt werden kann. Solche Cure-sites sind beispielsweise Brom- oder Iodsubstituenten, die in das Fluorpolymer eingeführt werden, indem man entweder Brom- und/oder Iod-haltige Vinylverbindungen in kleinen Mengen mit den Fluormonomeren copolymerisiert, (US 3.351.619; US 4.035.565; US 4.214.060; DE-OS 3 715 210) oder indem man in Gegenwart von gesättigten, Iod oder Brom und Iod enthaltenden Verbindungen polymerisiert (DE-OS 2 815 187; DE-OS 3 710 818). Solche durch Brom und/oder Iod modifizierten Fluorpolymere können in Gegenwart eines Co-Vernetzers radikalisch, beispielsweise durch peroxidische Verbindungen, vernetzt werden. Als Co-Vernetzer können Triallyl-cyanurat oder Triallyl-isocyanurat eingesetzt werden (Rubber Chem. Technol. 55 (1982), 1004).

Solche peroxidisch vernetzten Fluorkautschuke zeigen im Vergleich zu beispielsweise mit Bisphenolen vernetzten Typen eine wesentlich verbesserte Resistenz gegenüber Basen, Nucleophilen und oxidativem Angriff (Kautschuk und Gummi, Kunststoffe 38 (1985), 471).

Die Brom- oder Iod-haltigen Fluorpolymere besitzen jedoch den Nachteil, daß bei der radikalischen Vernetzungsreaktion niedermolekulare Alkylbromide bzw. -iodide entstehen können, die während der Vernetzungsreaktion herausdampfen und dadurch die Verarbeitungs- sowie Gebrauchseigenschaften beeinträchtigen.

Es bestand daher ein Bedarf an Fluorpolymeren, die radikalisch, beispielsweise peroxidisch, unter milden Reaktionsbedingungen vernetzbar sind und die oben genannten Schwächen nicht aufweisen. Diese geforderten Eigenschaften ließen sich grundsätzlich durch den Einbau mehrfunktioneller Monomerer, d.h. Monomerer mit mehr als einer reaktiven Doppelbindung, erreichen, wenn ein gesteuerter Einbau unter Erhalt eines Teils der Doppelbindung möglich wäre.

Polymerisiert man jedoch Fluormonomere nach dem Stand der Technik in Gegenwart mehrfach ungesättigter Monomerer, wie Perfluordivinylether (US 3.851.018), so findet bereits während der Copolymerisation in für viele Zwecke unerwünschter Weise eine beträchtliche Vernetzung der Polymeren statt.

Durch Copolymerisation mit Hexafluortriallyl-isocyanurat erreicht man sogar einen besonders hohen Vernetzungsgrad bei Fluorpolymerisaten (US 4.320.216). Unvernetzte Fluorpolymere mit seitenständigen C-C-Doppelbindungen sind nach den bekannten Verfahren nicht zugänglich.

Es wurde nun gefunden, daß sich fluorhaltige Vinylverbindungen der unten genannten Art und Alkenyl-isocyanurate und/oder Alkenyl-cyanurate der weiter unter genannten Art so copolymerisieren lassen, daß im wesentlichen unvernetzte Copolymere entstehen, die reaktive Doppelbindungen als Seitengruppen enthalten und radikalisch unter milden Bedingungen vernetzbar sind.

Die Erfindung betrifft unvernetzte Copolymerisate mit reaktiven Doppelbindungen enthaltend
a) 50-99,9 Mol-%, bezogen auf die Molzahlen aller Comonomerer, eines oder mehrerer Ethylene mit 1-4 Fluoratomen,
b) 0-49,9 Mol-%, bezogen auf die Molzahlen aller Comonomerer, eines oder mehrerer Comonomerer aus der Gruppe von
   b1) geradkettigen oder verzweigten C₃-C₈-Alkenen mit mindestens einem Fluoratom,
   b2) Alkyl-vinylethern mit mindestens einem Fluoratom,
   b3) offenkettigen oder cyclischen C₃-C₆-Ketonen mit fluorierten α,α'-Stellungen und
   b4) nicht fluorierten C₂-C₄-Alkenen, C₃-C₆-Alkyl-vinylethern und C₄-C₆-Vinylestern und
c) 0,1-5 Mol-%, bevorzugt 0,2-2,5 Mol-%, besonders bevorzugt 0,3-1,5 Mol-%, bezogen auf die Molzahlen aller Comonomerer, eines oder mehrerer Comonomerer aus der Gruppe der Alkenyl-isocyanurate und der Alkenyl-cyanurate der Formeln 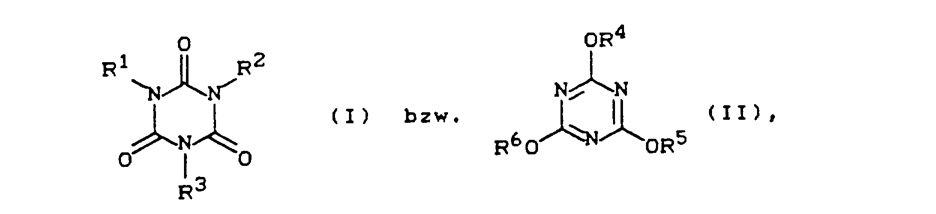
worin
- R¹, R, R⁴ und R⁵: unabhängig voneinander C₃-C₆-Alkenyl mit endständiger Doppelbindung und
- R³ und R⁶: unabhängig voneinander C₃-C₆-Alkenyl mit endständiger Doppelbindung oder C₁-C₅-Alkyl bedeuten.

Die Erfindung betrifft weiterhin ein Verfahren zur Herstellung von Copolymerisaten. der oben beschriebenen Art, das dadurch gekennzeichnet ist, daß man die oben genannten Comonomeren radikalisch in Lösung, Suspension oder Emulsion bei -15°C bis +120°C, bevorzugt bei 20-90°C, besonders bevorzugt bei 30-80°C bei erhöhtem Druck copolymerisiert.

Die erfindungsgemäßen Copolymerisate sind im wesentlichen unvernetzt. Erfindungsgemäß bedeutet dies, daß sie Gelgehalte von <10 %, bevorzugt von <4 % haben; in besonders bevorzugter Weise liegt der Gelgehalt unterhalb der Nachweisgrenze, was bedeutet, daß die erfindungsgemäßen Fluorpolymere in Flüssigkeiten, in denen sie überhaupt löslich sind, vollständig löslich sind. Die Bestimmung der Gelgehalte erfolgt hierbei nach M. Hoffmann et. al., Polymeranalytik I und II, Georg Thieme Verlag, Stuttgart 1977. Die Gelgehalte werden hierbei in solchen Lösungsmitteln bestimmt, in denen die entsprechenden Fluorpolymere ohne eingebaute Monomereinheiten der obigen Formeln (I) und/ oder (II) vollständig löslich sind. Die erfindungsgemäßen Copolymerisate besitzen mittlere Molmassen von 10³ bis 10⁷ g/Mol, bevorzugt 10³ bis 2·10⁶ g/Mol. Sie können linear oder verzweigt aufgebaut sein.

Als Bestandteil a) der erfindungsgemäßen Copolymerisate kommen Ethylene in Frage, die 1-4 Fluoratome tragen. Die nicht durch Fluor besetzten Bindungen der beiden Kohlenstoffatome können Wasserstoff oder Chlor oder beides tragen. Solche fluorierten Ethylene sind beispielsweise: Vinylidenfluorid, Tetrafluorethylen, Chlor-trifluorethylen und Vinylfluorid. Solche fluorierten Ethylene können sowohl einzeln als auch als Gemisch mehrerer von ihnen eingesetzt werden. In bevorzugter Weise werden als Bestandteile a) die oben beispielhaft genannten fluorierten Ethylene eingesetzt.

Als Bestandteil b) kommen eines oder mehrere Comonomere aus der Gruppe von b1), b2), b3) und b4) in Frage. Bestandteile der Gruppe b1) sind geradkettige oder verzweigte C₃-C₈-Alkene, die mindestens ein Fluoratom enthalten. Beispiele für Stoffe der Gruppe b1) sind: Hexafluorpropen, 2-Hydro-pentafluorpropen, 3,3,3-Trifluorpropen, ein- oder mehrfach fluorierte Butene, wie Hexafluorisobutylen, Pentene, Hexene oder Octene. Solche Stoffe können neben mindestens einem Fluoratom auch Chloratome tragen. In bevorzugter Weise handelt es sich bei Stoffen der Gruppe b1) um C₃-C₆-Alkene mit mindestens einem Fluoratom, in besonders bevorzugter Weise um C₃-C₄-Alkene mit mindestens einem Fluoratom.

Stoffe der Gruppe b2) sind Alkyl-vinylether mit mindestens einem Fluoratom, beispielsweise Perfluorpropyl-perfluorvinylether, Perfluormethyl-perfluorvinylether, Perfluorpropyl-vinylether, n-Butylperfluor-vinylether.

Stoffe der Gruppe b3) sind offenkettige und cyclische C₃-C₆-Ketone mit fluorierten α,α'-Stellungen, die über die C=O-Bindung copolymerisiert werden, wie Hexafluoraceton, Perfluorcyclopentanon.

Stoffe der Gruppe b4) sind nicht fluorierte C₂-C₄-Alkene, wie Ethylen, Propen, 1-Buten, Isobutylen, C₃-C₆-Alkyl-vinylether, wie Methyl-vinylether, Ethyl-vinylether und ähnliche und C₄-C₆-Vinylester, wie Vinylacetat, Vinylpropionat und andere.

Als Bestandteil c) werden Triester der Isocyanursäure oder der Cyanursäure oder Gemische mehrerer von Ihnen eingesetzt. Solche Ester entsprechen den Formeln (I) und (II) und enthalten mindestens zwei Alkenylestergruppen mit endständiger Doppelbindung. Die in den Formeln (I) bzw. (II) jeweils vorhandene dritte Estergruppe kann ebenfalls eine Alkenylgruppe mit endständiger Doppelbindung oder eine Alkylgruppe mit 1-5 C-Atomen sein. Solches Alkyl ist beispielsweise: Methyl, Ethyl, Propyl, Isopropyl, Butyl, Isobutyl, tert.-Butyl oder ein geradkettiges oder verzweigtes Pentyl. C₃-C₆-Alkenyl mit endständiger Doppelbindung ist beispielsweise Allyl, Buten-(3)-yl, 1-Methyl-buten-(3)-yl oder 2,2-Dimethylpropen-(3)-yl. In bevorzugter Weise werden als Bestandteil c) solche Stoffe eingesetzt, in denen R¹, R und R³ bzw. R⁴, R⁵ und R⁶ identisch sind und an der Doppelbindung keine Verzweigung aufweisen. In besonders bevorzugter Weise bedeuten diese identischen Substituenten Allyl.

In einem bevorzugten Fall, entspricht Bestandteil a) einem oder mehreren Comonomeren aus der Gruppe Vinylidenfluorid, Tetrafluorethylen, Chlor-trifluorethylen und Vinylfluorid und Bestandteil b) fluorhaltigen C₃-C₈-Alkenen.

Die Bestandteile a) b) und c) kommen grundsätzlich in den weiter oben genannten Mengen vor. Die Bestandteile a) und c) sind obligatorische Bestandteile der erfindungsgemäßen Copolymere. Ihre Anteile ergänzen sich zu 100 Mol-%. Hierbei sind die Untergruppen von b), nämlich b1), b2), b3) und b4) grundsätzlich gleichberechtigt und können in Form einer Verbindung oder in Form eines Gemisches mehrerer Verbindungen aus diesen Untergruppen als Comonomere vertreten sein.

Die Menge des Bestandteils c) beträgt 0,1 - 5 Mol-%, bevorzugt 0,2 - 2,5 Mol-%, besonders bevorzugt 0,3 - 1,5 Mol-%. Die Menge des Bestandteils a) oder der Summe der Bestandteile a) und b) unter Einsatz der Untergruppen b1), b2), b3) und/oder b4) beträgt entsprechend 95 - 99,9 Mol-%, bevorzugt 97,5 - 99,8 Mol-%, besonders bevorzugt 98,5 - 99,7 Mol-%. Innerhalb dieser zuletzt angegebenen Mengen beträgt die Menge des Bestandteils a) mindestens 50 Mol-%, wobei hier wie auch bei anderen Angaben zu den erfindungsgemäßen Copolymeren immer auf die gesamte Molzahl aller Comonomeren Bezug genommen wird. Die Comonomere der Gruppe b) haben einen Anteil von 0 bis 49,9 Mol-%, wobei die nicht fluorhaltigen ungesättigten Verbindungen der Untergruppe b4) in bevorzugter Weise bis zu einem maximalen Gehalt von 25 Mol-% eingesetzt werden. Die Untergrenze 0 Mol-% deutet an, daß die Comonomere des Bestandteils b) fakultative Comonomere der erfindungsgemäßen Copolymerisate sind und gegebenenfalls völlig fortgelassen werden. Es hat sich jedoch als vorteilhaft erwiesen, daß beim Einsatz der erfindungsgemäßen Copolymerisate als Kautschuke stets Anteile des Bestandteils b) in den Copolymerisaten vorhanden sind. Als solche Anteile für den Einsatz als Kautschuke kommen 5 - 45 Mol-%, bevorzugt 10 - 40 Mol-%, bezogen auf die Molzahl aller Comonomerer, in Frage, die sich auf verschiedene Untergruppen des Bestandteils b) verteilen können und auch mehr als eine Verbindung umfassen können. In bevorzugter Weise werden als Bestandteile b) solche aus den Untergruppen bl), b2) und/oder b4) eingesetzt. Als Kombinationen der Bestandteile a) und b) für den Einsatz als Kautschuk seien beispielweise genannt: Vinylidenfluorid/Hexafluorpropen, Vinylidenfluorid/Tetrafluorethylen/Hexafluorpropen, Vinylidenfluorid/Tetrafluorethylen/Perfluoralkyl-perfluorvinylether, Tetrafluorethylen/ Vinylidenfluorid/Hexafluorpropen/Pentafluorpropen, Tetrafluorethylen/Vinylidenfluorid/Hexafluorpropen/ Perfluoralkyl-perfluorvinylether, Tetrafluorethylen/ Hexafluorpropen/Hexafluorisobutylen, Vinylidenfluorid/Chlortrifluorethylen/Hexafluorpropen.

Neben den soeben beschriebenen Copolymerisaten, in denen Comonomere der Gruppe b) im Unterschuß gegenüber denen der Gruppe a) vorliegen, sind solche Compolymerisate von Bedeutung, in denen die Comonomere der Gruppe a) und b) annähernd in gleicher molarer Menge vorliegen.

Die Polymerisation kann hierbei so gelenkt werden, daß der größte Teil der Polymerkette streng alternierend Monomere a) und b) enthält, zu denen - entsprechend ihrer Gesamtmenge - in größeren Abständen Alkenyl-(iso)-cyanurate der Gruppe c) treten.

Die Zusammensetzung solcher erfindungsgemäßen Copolymerisate mit annähernd gleichen molaren Mengen von Comonomeren der Gruppen a) und b) beträgt 50-55 Mol-% aus Gruppe a), 44,9-49,9 Mol-% aus Gruppe b) und 0,1-5 Mol-% aus Gruppe c). Ein wichtiges Beispiel für eine Zweierkombination von Comonomeren, die in annähernd gleicher molarer Menge einpolymerisiert werden, ist die Kombination Tetrafluorethylen/Propen, wozu dann noch das Alkenyl-(iso)cyanurat aus Gruppe c) tritt.

Zur Herstellung der erfindungsgemäßen Copolymerisate können die für die Copolymerisation fluorhaltiger Monomerer bekannten Verfahrensparameter herangezogen werden; es kann in Lösung, Suspension oder Emulsion copolymerisiert werden (US 2.968.649; US 3.051.677; US 3.053.818; US 3.331.823; US 3.335.106 mit beispielhafter Angabe der in Frage kommenden Reaktionsmedien und allgemeinen Reaktionsbedingungen). Zur Initiierung der radikalischen Copolymerisation werden grundsätzlich bekannte und für das jeweilige Reaktionsmedium geeignete Verbindungen eingesetzt. So verwendet man bei der Lösungs- und Suspensionspolymerisation organische, öllösliche Peroxide, die auch fluoriert sein können, wie Benzoylperoxid, Trifluoracetylperoxid oder organische lösliche Azoverbindungen, wie Azobisisobutyronitril. Bei der Emulsionspolymerisation, die für die Herstellung der erfindungsgemäßen Copolymere bevorzugt wird, werden wasserlösliche anorganische Perverbindungen als Initiatoren benutzt, wie Persulfate, Perborate, Percarbonate etc., im allgemeinen in Form ihrer Natrium-oder Ammoniumsalze. In Abhängigkeit von der Polymerisationstemperatur und von der Zerfallskonstante des Initiators müssen bei Anwendung niederer Temperaturen zur Polymerisation Zerfallsbeschleuniger, in der Regel Reduktionsmittel, zusätzlich eingesetzt werden. Als solche können dienen:

Schwefelverbindungen, wie etwa Natriumsulfit, Natriumpyrosulfit oder Rongalit C (Natriumformamidinsulfinsäure), weiterhin organische Reduktionsmittel, wie Ascorbinsäure, Triethanolamin, Metallsalze, wie Eisen (II)- oder Kobalt(II)-salze, metallorganische Verbindungen etc. Die Reaktionstemperaturen für die Copolymerisation liegen zwischen -15 und +120°C, bevorzugt bei 20 bis 90°C, besonders bevorzugt bei 30 bis 80°C. Der zuletzt genannte Temperaturbereich bringt besonders günstige Bedingungen bezüglich der Raum-Zeit-Ausbeute und der chemischen Einheitlichkeit der Copolymerisate.

Für den bevorzugten Fall der Emulsionspolymerisation werden zur Stabilisierung der Dispersion fluorierte Emulgatoren eingesetzt. Bevorzugt gelangen perfluorierte Emulgatoren (z.B. wasserlösliche Salze der C₆-C₁₂-Perfluorcarbonsäure oder -sulfonsäure) zum Einsatz. Beispielhaft seien hier die Natrium- oder Ammoniumsalze der Perfluoroctansäure und das Lithiumsalz der Perfluoroctansulfonsäure genannt. Die einzusetzenden Mengen richten sich nach der kritischen Micellkonzentation des benutzten Emulgators im jeweiligen System. So liegt beispielsweise die einzusetzende Menge an Lithiumperfluorooctansulfonat zwischen 0,3 und 1 Gew.-%, bezogen auf die wäßrige Phase, wohingegen vom Natrium- oder Ammoniumperfluoroctanoat Konzentrationen zwischen 1 und 2 Gew,-% erforderlich sind.

Um das Molekulargewicht der entstehenden Polymeren einzustellen, können Kettenübertragungsmittel, wie Methanol, Isopropanol, Isopentan, Ethylacetat, Diethylmalonat und Tetrachlorkohlenstoff erforderlichenfalls eingesetzt werden.

Es ist ein weiteres Kennzeichen des erfindungsgemäßen Verfahrens, daß die Copolymerisation unter einem erhöhtem Druck durchgeführt wird. Dieser Druck soll mindestens 6 bar, vorzugsweise mindestens 10 bar, betragen, braucht aber den Wert von 100 bar nicht zu überschreiten. Die erfindungsgemäße Copolymerisation kann absatzweise erfolgen, eignet sich aber bevorzugt für die halbkontinuierliche oder kontinuierliche Durchführung.

In einer vorteilhaften Variante des erfindungsgemäßen Verfahrens wird die stationäre Konzentration an freiem Monomer des Bestandteils c), also von Verbindungen, die unter die Formeln (I) und (II) fallen, klein gehalten. Dies wird dadurch erreicht, daß man in absatzweisen oder halbkontinuierlichen Verfahren 0,02 - 1,5 Mol-%, vorzugsweise 0,01 bis 0,5 Mol-%, an Verbindung(en) der Formel(n) (I) bzw. (II), bezogen auf die Gesamtzahl der umzusetzenden Comonomeren, gegebenenfalls gemeinsam mit anderen Comonomeren der Bestandteile a) und b), vorlegt und die restliche Menge an Bestandteil c) entsprechend dem Fortschritt der Copolymerisation gleichmäßig nachdosiert. Dieses Nachdosieren erfolgt selbstverständlich unter gleichzeitigem Nachdosieren auch der Bestandteile der a) und b). Der genannte Bereich 0,02 - 1,5 Mol-% an Monomeren der Formeln (I) und/oder (II) stellt jeweils einen Teil von etwa 5 -20 Relativ-% an Bestandteil c), bezogen auf die insgesamt einzusetzende Menge an 0,1 - 5 Mol-% des Bestandteils c) dar. Das Vorlegen und das Nachdosieren des Bestandteils c) kann in Form der Schmelze solcher Monomerer erfolgen aber auch als Lösung in solchen Lösungsmitteln, die die radikalische Copolymerisation nicht stören. Solche Lösungsmittel sind beispielsweise t-Butanol, n-Hexan und Essigsäuremethylester.

In der angegebenen Weise werden auch die Bestandteile a) und gegebenenfalls (bei ihrer Mitverwendung) b) möglichst gleichmäßig im Maße ihres Verbrauches nachdosiert, was beispielsweise durch Konstanthaltung des Druckes bewirkt werden kann. Eine solche Verfahrensweise ist insbesondere bei halbkontinuierlichen oder vollkontinuierlichen Verfahren bevorzugt.

Die erfindungsgemäßen Copolymerisate können radikalisch vernetzt werden, wozu auf den Zusatz von Co-Vernetzern gegebenenfalls verzichtet werden kann. Der Radikalstart kann durch energiereiche Strahlung oder thermisch in Gegenwart von Radikalstartern eingeleitet werden. Als radikalische Initiatoren dienen vorzugsweise Peroxide, die bei Temperaturen oberhalb von 100°C Halbwertszeiten der Zersetzung von wenigstens 5 Minuten aufweisen. Solche Initiatoren sind beispielsweise Dibenzoylperoxid, Bis-(tert.-butylperoxy-isopropyl)-benzol oder 2,5-Bis-(tert.-butylperoxy)-2,5-dimethylhexan, die in üblichen Mengen eingesetzt werden. Die Einarbeitung eines solchen Peroxids in das unvernetzte erfindungsgemäße Copolymerisat ist nach den herkömmlichen Methoden der Mischungsbildung möglich. So können die erfindungsgemäßen Copolymere auf der Walze oder im Kneter zu den genannten Mischungen verarbeitet werden, die anschließend bei 120 bis 180°C zu Elastomeren vulkanisiert werden oder zu formstabilen Formkörpern verfestigt werden. Eine Verarbeitung in Lösung oder Schmelze ist ebenso möglich, wobei nach der Formgebung die Trocknung und Vernetzung in einem Schritt erfolgen können, wenn man etwa Formkörper in Form von Folien, Filmen, Fasern oder kompakten Formkörpern herstellt. Selbstverständlich ist es auch möglich, zusätzliche Co-Vernetzer einzuarbeiten. Als solche Co-Vernetzer kann (können) eine oder mehrere Verbindungen aus der Vielzahl der bekannten Verbindungen mit mehreren Doppelbindungen dienen, wie beispielsweise Triallylcyanurat, Triallylisocyanurat, Trimethallylisocyanurat, Tetramethyl-tetravinyl-cyclotetrasiloxan, m-Phenylen-bismaleinimid und andere.

Die erfindungsgemäßen Copolymerisate sind vor allem durch gute Verarbeitungseigenschaften, wie die Vermischbarkeit mit Füllstoffen, Vernetzungshilfsmitteln, Pigmenten etc. ausgezeichnet, so daß Mischungen oder Blends von hoher Homogenität erzeugt werden können, die anschließend schnell und unter schonenden Bedingungen zu thermostabilen Vulkanisaten oder gehärteten Formkörpern vernetzt werden können. Der Vernetzungsgrad und damit die physikomechanischen Eigenschaften des vernetzten Materials lassen sich in weiten Grenzen gezielt variieren.

Ein besonderer Vorteil der erfindungsgemäßen Copolymerisate ist, daß sie kein Brom und/oder Iod enthalten und demzufolge bei der peroxidischen Vernetzung kein toxisches Alkylbromid und/oder -jodid freigesetzt werden kann.

### Beispiele

### Beispiel 1

In einem 0,7-1-Autoklaven wurden 300 ml entionisiertes Wasser vorgelegt. Darin wurden 4,1 g Natriumperfluoroctanoat und 1,6 g Kaliumpersulfat gelöst. Mit Natriumhydroxid wurde diese Lösung auf einen pH-Wert von etwa 10 eingestellt. Anschließend wurden darin 1,3 g Triallylisocyanurat dispergiert. Dann wurde der geschlossene Autoklav dreimal jeweils mit einem Stickstoffdruck von 10 bar beaufschlagt und anschließend auf Normaldruck entspannt. In den Autoklaven wurden 50 g Hexafluorpropen und 50 g Vinylidenfluorid gegeben und das Reaktionsgemisch unter Rühren auf 70°C erwärmt. Nach Erreichen dieser Temperatur wurden innerhalb von 3,5 Stunden 2,3 g Triallylisocyanurat, die in 15 ml tert.-Butanol gelöst waren, zugepumpt. Nach einer Gesamtreaktionszeit von 4,5 Stunden bei 70°C, in welcher der Reaktionsdruck von 42 bar auf 21 bar abnahm, wurde der Autoklavinhalt abgekühlt und das nicht umgesetzte Gasgemisch abgelüftet. Die so erhaltene wässrige Emulsion wurde zum Koagulieren des Produktes in 300 ml einer 4 %igen wässrigen Magnesiumsulfatlösung gegossen. Das Produkt wurde mit Wasser gewaschen und dann getrocknet, wobei man 57 g eines kautschukartigen Copolymeren erhielt. Anhand der Analysen des Stickstoff- und Fluorgehaltes wurde folgende Copolymerzusammensetzung bestimmt:

### Vinylidenfluorid/Hexafluorpropen/Triallylisocyanurat = 76,2/23,0/0,8 (Molverhältnis)

Das Copolymer ist in Dimethylformamid vollständig löslich. Die Grenzviskositätszahl (Dimethylformamid, 25°C) beträgt 0,5 dl/g. Das Vorhandensein freier Doppelbindungen läßt sich durch Addition von Iodbromid nachweisen, Die Iodzahl nach HANUS beträgt 2,0 g Iod/100 g Polymer.

### Beispiel 2

66 g eines kautschukartigen Copolymeren erhielt man nach der in Beispiel 1 beschriebenen Verfahrensweise, wobei jedoch die im Polymerisationsansatz vorgelegte Menge an Triallylisocyanurat auf 0,8 g reduziert wurde und innerhalb von 3,5 Stunden nur 1,8 g Triallylisocynurat, in 25 ml tert.-Butanol gelöst, zugepumpt wurden.

Anhand der Analysen des Stickstoff- und Fluorgehaltes wurde folgende Copolymerzusammensetzung bestimmt:

### Vinylidenfluorid/Hexafluorpropen/Triallylisocyanurat = 75,1/24,5/0,4 (Molverhältnis)

Das Copolymer ist in Dimethylformamid vollständig löslich. Die Grenzviskositätszahl (Dimethylformamid, 25°C) beträgt 1,1 dl/g. Die Iodzahl nach HANUS beträgt 0,5 g Iod/100 g Polymer.

### Beispiel 3

In einem 6 1-Autoklaven wurden 2500 ml entionisiertes Wasser vorgelegt. Darin wurden 9 g Lithiumperfluoroctansulfonat und 15 g Kaliumperoxidisulfat gelöst sowie 1,3 g Triallylisocyanurat dispergiert. Diese Mischung zeigte einen pH-Wert von 10,5. Dann wurde der geschlossene Autoklav dreimal jeweils mit einem Stickstoffdruck von 10 bar beaufschlagt und anschließend auf Normaldruck entspannt. In den Autoklaven wurden 300 g Hexafluorpropen und 200 g Vinylidenfluorid gegeben und das Reaktionsgemisch unter Rühren auf 50°C erwärmt. Nach Erreichen dieser Temperatur betrug der Autoklaveninnendruck 20 bar. Die Polymerisation wurde eingeleitet durch die kontinuierliche Zugabe von 10 ml pro Stunde einer wäßrigen Lösung, die 1,5 g Triethanolamin enthielt. Während der Polymerisation wurde ein Monomergemisch aus 60 Gew.-Teilen Vinylidenfluorid und 40 Gew.-Teilen Hexafluorpropen so nachgedrückt, daß der Autoklaveninnendruck konstant auf 20 bar gehalten wurde. Im gleichen Maße wurden kontinuierlich 2,7 Gew.-Teile Triallylisocyanurat (gelöst in 5,4 ml Essigsäuremethylester), bezogen auf 100 Gew.-Teile nachgedrückter Fluormonomere, in den Autoklaven gedrückt. Innerhalb einer Gesamtreaktionszeit von 9 Stunden wurden auf diese Weise unter Anwendung der gleichen Gewichtsverhältnisse insgesamt 300 g Vinylidenfluorid, 200 g Hexafluorpropen und 13,5 g Triallylisocyanurat durch Polymerisation verbraucht. Zur Beendigung der Polymerisation wurde der Autoklaveninhalt abgekühlt und das nicht umgesetzte Gasgemisch abgelüftet. Es wurde eine koagulatfreie wäßrige Emulsion mit einem Feststoffgehalt von 18 % erhalten. Durch die analoge Ausführung der im Beispiel 1 beschriebenen Verfahrensweise zur Produktisolierung erhielt man 550 g eines Fluorkautschuks. Das molare Verhältnis von Vinylidenfluorid zu Hexafluorpropen im Copolymeren wurde durch ¹⁹F-Kernresonanzspektroskopie und der Gehalt an polymer gebundenem Triallylisocyanurat durch Stickstoffelementaranalyse bestimmt. Die Copolymerzusammensetzung beträgt:

Vinylidenfluorid/Hexafluorpropen/Triallylisocyanurat = 79,9/19,7/0,4 (Molverhältnis).

Das Copolymer ist in Dimethylformamid, Dimethylacetamid und Aceton löslich; die Grenzviskositätszahl beträgt 1,2 dl/g (DMF, 25°C). Die Iodzahl nach HANUS beträgt 2,4 g Iod/100 g Polymer.

### Beispiel 4

In einem 6-1-Autoklaven wurden 2580 ml entionisiertes Wasser vorgelegt. Darin wurden 34,4 g Natriumperfluoroctanoat und 12,9 g Kaliumpersulfat gelöst. Mit Natriumhydroxid wurde diese Lösung auf einen pH-Wert von etwa 10 eingestellt. Anschließend wurden darin 7,7 g Triallylisocyanurat dispergiert. Dann wurde der geschlossene Autoklav dreimal jeweils mit einem Stickstoffdruck von 10 bar beaufschlagt und anschließend auf Normaldruck entspannt. In den Autoklaven wurden 516 g Hexafluorpropen und 516 g Vinylidenfluorid gegeben und das Reaktionsgemisch unter Rühren auf 70°C erwärmt. Nach Erreichen dieser Temperatur wurden innerhalb von 4 Stunden 31,4 g Triallylisocyanurat, die in 130 ml tert.-Butanol gelöst waren, und anschließend innerhalb von 3 Stunden 17,6 g Triallylisocyanurat, die in 70 ml tert.-Butanol gelöst waren, zugepumpt. Nach einer Gesamtreaktionszeit von 8 Stunden bei 70°C, in welcher der Reaktionsdruck von 46 bar auf 33 bar abnahm, wurde der Autoklavinhalt abgekühlt und das nicht umgesetzte Gasgemisch abgelüftet. Durch die analoge Ausführung der im Beispiel 1 beschriebenen Verfahrensweise zur Produktisolierung erhielt man 477 g eines kautschukartigen Copolymeren.

Anhand der Analysen des Stickstoff- und Fluorgehaltes wurde folgende Copolymerzusammensetzung bestimmt:

### Vinylidenfluorid/Hexafluorpropen/Triallylisocyanurat = 81,7/15,4/2,9 (Molverhältnis)

Das Copolymer ist in Dimethylformamid zu 92,5 % löslich, es wird ein Gelgehalt von 7,5 Gew.-% gefunden. Die Grenzviskositätszahl (Dimethylformamid, 25°C) beträgt 1,6 dl/g. Die Iodzahl nach HANUS beträgt 5,0 g Iod/100 g Polymer.

### Beispiel 5

In einem 0,7-1-Autoklaven wurden 250 ml entionisiertes Wasser vorgelegt. Darin wurden 5,0 g Natriumperfluoroctanoat und 2,0 g Kaliumpersulfat gelöst. Mit Natriumhydroxid wurde diese Lösung auf einen pH-Wert von etwa 10 eingestellt. Anschließend wurden darin 1,0 g Triallylcyanurat dispergiert. Dann wurde der geschlossene Autoklav dreimal jeweils mit einem Stickstoffdruck von 10 bar beaufschlagt und anschließend auf Normaldruck entspannt. In den Autoklaven wurden 80 g Vinylidenfluorid gegeben und das Reaktionsgemisch unter Rühren auf 70°C erwärmt. Nach Erreichen dieser Temperatur wurden innerhalb von 6 Stunden 3 g Triallylcyanurat, die in 27 ml tert.-Butanol gelöst waren, zugepumpt. Nach einer Gesamtreaktionszeit von 6,5 Stunden bei 70°C, in welcher der Reaktionsdruck von 43 bar auf 24 bar abnahm, wurde der Autoklavinhalt abgekühlt und das nicht umgesetzte Vinylidenfluorid abgelüftet. Durch die analoge Ausführung der im Beispiel 1 beschriebenen Verfahrensweise zur Produktisolierung erhielt man 46 g eines Copolymeren. Anhand der Analysen des Stickstoff- und Fluorgehaltes wurde folgende Copolymerzusammensetzung bestimmt:

### Vinylidenfluorid/Triallylcyanurat = 98,7/1,3 (Molverhältnis)

Das Copolymer ist in Dimethylformamid zu 96,2 % löslich, es wird ein Gelgehalt von 3,8 Gew.-% gefunden. Die Grenzviskositätszahl (Dimethylformamid, 25°C) beträgt 1,1 dl/g. Die Iodzahl nach HANUS beträgt 1,3 g Iod/100 g Polymer.

### Beispiel 6

In einem 0,3-1-Autoklaven wurden 150 ml entionisiertes Wasser vorgelegt. Darin wurden 1,1 g Lithiumperfluoroctansulfonat und 0,8 g Kaliumpersulfat gelöst. Mit Natriumhydroxid wurde diese Lösung auf einen pH-Wert von etwa 10 eingestellt. Anschließend wurden darin 1,3 g Triallylcyanurat dispergiert. Dann wurde der geschlossene Autoklav dreimal jeweils mit einem Stickstoffdruck von 10 bar beaufschlagt und anschließend auf Normaldruck entspannt. In den Autoklaven wurden 60 g Chlortrifluorethylen gegeben und das Reaktionsgemisch unter Rühren auf 70°C erwärmt. Nach einer Gesamtreaktionszeit von 6,5 Stunden bei 70°C, in welcher der Reaktionsdruck von 19 bar auf 13 bar abnahm, wurde der Autoklavinhalt abgekühlt und das nicht umgesetzte Chlortrifluorethylen abgelüftet. Durch die analoge Ausführung der im Beispiel 1 beschriebenen Verfahrensweise zur Produktisolierung erhielt man 43 g eines Copolymeren.

Anhand der Analysen des Chlor- und Stickstoffgehaltes wurde folgende Copolymerzusammensetzung bestimmt:
Chlortrifluorethylen/Triallylcyanurat = 97,6/2,4 (Molverhältnis)

Das Copolymer ist in Dimethylformamid nicht löslich, ein analog hergestelltes, kein Triallylcyanurat enthaltendes Polychlortrifluorethylen ist in Dimethylformamid ebenfalls unlöslich. Das Copolymere schmilzt bei 209 bis 213°C und besitzt eine Schmelzviskosität von 900 Pa,s bei 230°C gemessen am Kegel-Platte-Rheometer bei einer Schergeschwindigkeit von 0,8 s⁻¹. Das analog hergestellte reine Polychlortrifluorethylen schmilzt bei 210 bis 212°C und besitzt unter gleichen Meßbedingungen eine Schmelzviskosität von 750 Pa.s bei 230°C. Bei dem Triallylcyanurat enthaltenden Copolymeren handelt es sich demzufolge um ein unvernetztes Polymer.

### Beispiel 7

In einem Kneter wurde eine Mischung aus 100 Gew.-Tln. des gemäß Beispiel 2 erhaltenen Copolymeren mit 3 Gew.-Tln. Calciumhydroxid und 5 Gew.-Tln. Bis-(t-butylperoxyisopropyl)-benzol hergestellt. Diese Mischung wurde 30 Minuten bei 180°C druckvulkanisiert und 24 Stunden bei 200°C im Umluftofen nachvulkanisiert.

Das vulkanisierte Produkt ist im Gegensatz zum Ausgangscopolymeren in Dimethylformamid nicht löslich (Gelgehalt in Dimethylformamid: 92 % mit einem Quellungsgrad von 7, d.h. praktisch vollständig vernetzt). Eine analog hergestellte Mischung aus einem Vinylidenfluorid-Hexafluorpropen-Copolymer, das kein Polymer-gebundenes Triallylisocyanurat enthält, läßt sich unter den angegebenen Bedingungen nicht vernetzen.

### Beispiel 8

Auf einem Zweiwalzen-Gummi-Mischwalzwerk wurde eine Mischung aus 100 Gew.-Teilen des gemäß Beispiel 3 erhaltenen Copolymeren mit 3 Gew.-Teilen Calciumhydroxid, 30 Gew.-Teilen Ruß MT Black N 990, 2 Gew.-Teilen Percalink 301-50 (Triallylisocyanurat, 50%ig in inaktiven Füllstoffen) und 3 Gew.-Teilen Luperco 101 XL (2,5-Dimethyl-2,5-bis(tertiärbutyl)-hexan) (45%ig in inaktiven Füllstoffen) hergestellt. Diese Mischung wurde 10 Minuten bei 170°C druckvulkanisiert und 24 Stunden bei 200°C im Umluftofen nachvulkanisiert.

Die gemäß Beispiel 7 und 8 hergestellten Vulkanisate (100x100x1 mm-Platten) besitzen folgende Zug-Dehnungscharakteristik:

| Meßgröße | Beispiel 7 | Beispiel 8 |
|---|---|---|
| Reißfestigkeit [N/mm] | 22 | 24 |
| Reißdehnung [%] | 310 | 350 |
| Spannung bei 100 % Dehnung [N/mm] | 9,5 | 5,9 |

### Beispiel 9

5 g des gemäß Beispiel 5 hergestellten Copolymeren wurden mit 1,5 g Triallylcyanurat und 0,75 g Dibenzoylperoxid in 20 g Dimethylformamid gelöst und zu einem 1 mm starken Film vergossen, Der Film wurde 5 Stunden bei 120°C getrocknet. Man erhielt einen vernetzten Film, der sich nicht mehr in Dimethylformamid löste (Gelgehalt in DMF: 80 % mit einem Quellungsgrad von 5). Ein Polyvinylidenfluorid- oder ein Vinylidenfluorid-Hexafluorpropen-Copolymerfilm läßt sich unter den angegebenen Bedingungen nicht vernetzen.

## Patentansprüche

1. Unvernetzte Copolymerisate mit reaktiven Doppelbindungen enthaltend
a) 50-99,9 Mol-%, bezogen auf die Molzahlen aller Comonomerer, eines oder mehrerer Ethylene mit 1-4 Fluoratomen,
b) 0-49,9 Mol-%, bezogen auf die Molzahlen aller Comonomerer, eines oder mehrerer Comonomerer aus der Gruppe von
b1) geradkettigen oder verzweigten C₃-C₈-Alkenen mit mindestens einem Fluoratom,
b2) Alkyl-vinylethern mit mindestens einem Fluoratom,
b3) offenkettigen oder cyclischen C₃-C₆-Ketonen mit fluorierten α,α'-Stellungen und
b4) nicht fluorierten C₂-C₄-Alkenen, C₃-C₆-Alkyl-vinylethern und C₄-C₆-Vinylestern
und
c) 0,1-5 Mol-%, bevorzugt 0,2-2,5 Mol-%, besonders bevorzugt 0,3-1,5 Mol-%, bezogen auf die Molzahlen aller Comonomerer, eines oder mehrerer Comonomerer aus der Gruppe der Alkenyl-isocyanurate und der Alkenyl-cyanurate der Formeln 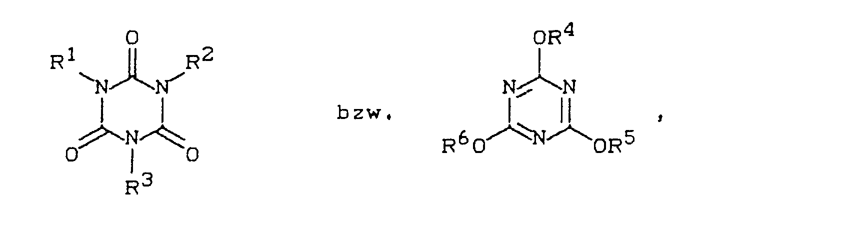
worin
R¹, R, R⁴ und R⁵ unabhängig voneinander C₃-C₆-Alkenyl mit endständiger Doppelbindung und
R³ und R⁶ unabhängig voneinander C₃-C₆-Alkenyl mit endständiger Doppelbindung oder C₁-C₅-Alkyl bedeuten.

2. Copolymerisate nach Anspruch 1, dadurch gekennzeichnet, daß Bestandteil a) einem oder mehreren Comonomeren aus der Gruppe Vinylidenfluorid, Tetrafluorethylen, Chlortrifluorethylen und Vinylflurorid und Bestandteil b) fluorhaltigen C₃-C₈-Alkenen entspricht.

3. Copolymerisate nach Anspruch 1, dadurch gekennzeichnet, daß Kombinationen zweier oder mehrerer Fluormonomerer aus der Gruppe Vinylidenfluorid/Hexafluorpropen, Vinylidenfluorid/Tetrafluorethylen/Hexafluorpropen, Tetrafluorethylen/Vinylidenfluarid/Perfluoralkyl-perfluorvinylether, Tetrafluorethylen/Propen, Tetrafluorethylen/Vinylidenfluorid/Hexafluarpropen/Pentafluorpropen, Tetrafluorethylen/Vinylidenfluorid/Hexafluorpropen/Perfluoralkyl-perfluorvinylether/ Tetrafluorethylen/Hexafluorpropen/Hexafluorisobutylen,und Vinylidenfluarid/Chlortrifluorethylen/Hexafluorpropen eingesetzt werden.

4. Copolymerisate nach Anspruch 1, dadurch gekennzeichnet, daß R¹, R und R³ bzw. R⁴, R⁵ und R⁶ identisch sind und daß bevorzugt R¹ bis R⁶ Allyl bedeuten.

5. Copolymerisate nach Anspruch 1, dadurch gekennzeichnet, daß sie zum Einsatz als Kautschuk-Vorläufer einen Anteil von 5 - 45 Mol-%, bevorzugt 10 bis 40 Mol-%, bezogen auf die Mohlzahl aller Comonomerer, Comonomere des Bestandteils b), bevorzugt der Bestandteile b1), b2) und/oder b4) enthalten.

6. Verfahren zur Herstellung von Copolymerisaten nach Anspruch 1, dadurch gekennzeichnet, daß man die in Anspruch 1 genannten Comonomeren radikalisch in Lösung, Suspension oder Emulsion bei -15°C bis +120°C, bevorzugt bei 20 - 90°C, besonders bevorzugt bei 30 -80°C bei erhöhtem Druck copolymerisiert.

7. Verfahren nach Anspruch 6, dadurch gekennzeichnet, daß die Copolymerisation in Emulsion durchgeführt wird.

8. Verfahren nach Anspruch 7, dadurch gekennzeichnet, daß als radikalische Initiatoren anorganische Perverbindungen eingesetzt werden.

9. Verfahren nach Anspruch 6, dadurch gekennzeichnet, daß man maximal 0,02 - 1,5 Mol-%, bezogen auf die Molzahlen aller Comonomerer, an Alkenyl-isocyanurat und/oder Alkenyl-cyanurat der Formeln (I) bzw. (II) vorlegt und den Rest der vorgesehenen Menge an (I) bzw. (II) gemäß Polymerisationsfortschritt nachdosiert.

10. Verfahren nach Anspruch 9, dadurch gekennzeichnet, daß sowohl das Alkenyl-isocyanurat und/oder das Alkenyl-cyanurat (I) bzw. (II) als auch die Fluorcomonomeren bzw. die sie teilweise ersetzenden nicht fluorierten Monomere gemäß Polymerisationsfortschritt nachdosiert werden.

## Claims

1. Non-crosslinked copolymers with reactive double bonds, containing
a) 50 - 99.9 mol-%, with respect to the number of moles of all the comonomers, of one or more ethylenes with 1-4 fluorine atoms,
b) 0 - 49.9 mol-%, with respect to the number of moles of all the comonomers, of one or more comonomers from the group consisting of
b1) straight-chain or branched C₃-C₈-alkenes with at least one fluorine atom,
b2) alkyl-vinyl ethers with at least one fluorine atom,
b3) open-chain or cyclic C₃-C₆-ketones with fluorinated α,α-positions and
b4) non-fluorinated C₂-C₄-alkenes, C₃-C₆-alkylvinyl ethers and C₄-C₆-vinyl esters
and
c) 0.1 - 5 mol-%, preferably 0.2 - 2.5 mol-%, in particular 0.3 - 1.5 mol-%, with respect to the number of moles of all the comonomers, of one or more comonomers from the group of alkenyl isocyanurates and alkenyl cyanurates of the formulas 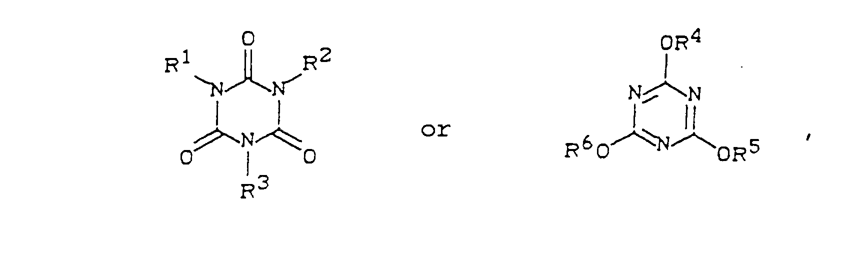
in which
R¹, R, R⁴ and R⁵ independently of each other represent C₃-C₆-alkenyl groups with terminal double bonds and
R³ and R⁶ independently of each other represent C₃-C₆-alkenyl groups with terminal double bonds or C₁-C₅-alkyl groups.

2. Copolymers according to Claim 1, characterised in that constituent a) corresponds to one or more comonomers from the group consisting of vinylidene fluoride, tetrafluoroethylene, chlorotrifluoroethylene and vinyl fluoride and constituent b) corresponds to fluorine-containing C₃-C₈-alkenes.

3. Copolymers according to Claim 1, characterised in that combinations of two or more fluorinated monomers from the group consisting of vinylidene fluoride/hexafluoropropene, vinylidene fluoride/tetrafluoroethylene/hexafluoropropene, tetrafluoroethylene/vinylidene fluoride/perfluoroalkyl-perfluorovinyl ether, tetrafluoroethylene/propene, tetrafluoroethylene/vinylidene fluoride/hexafluoropropene/pentafluoropropene, tetrafluoroethylene/vinylidene fluoride/hexafluoropropene/perfluoroalkylperfluorovinyl ether, tetrafluoroethylene/hexafluoropropene/ hexafluoroisobutylene and vinylidene fluoride/chlorotrifluoroethylene/hexafluoropropene, are used.

4. Copolymers according to Claim 1, characterised in that R¹, R and R³ and R⁴, R⁵ and R⁶ respectively are identical and that R¹ to R⁶ preferably represent allyl groups.

5. Copolymers according to Claim 1, characterised in that they contain, for use as rubber precursors, an amount of 5 - 45 mol-%, preferably 10 to 40 mol-%, with respect to the number of moles of all the comonomers, of comonomers from constituents b), preferably constituents b1), b2) and/or b4).

6. A process for preparing copolymers according to Claim 1, characterised in that the comonomers mentioned in Claim 1 are radically copolymerised at elevated pressure in solution, suspension or emulsion at -15°C to +120°C, preferably at 20 - 90°C and in particular at 30 - 80°C.

7. A process according to Claim 6, characterised in that copolymerisation is performed in emulsion.

8. A process according to Claim 7, characterised in that inorganic per-compounds are used as radical initiators.

9. A process according to Claim 6, characterised in that a maximum of 0.02 - 1.5 mol-%, with respect to the number of moles of all the comonomers, of alkenyl isocyanurate and/or alkenyl cyanurate of the formulas (I) and (II) respectively is initially introduced and the remainder of the designated amounts of (I) and (II) respectively are added later in accordance with the progress of polymerisation.

10. A process according to Claim 9, characterised in that both the alkenyl isocyanurate and/or the alkenyl cyanurate (I) and (II) respectively and also the fluorinated comonomers and the non-fluorinated monomers partly replacing these are added later in accordance with the progress of polymerisation.

## Revendications

1. Copolymères non réticulés comprenant des liaisons doubles réactives contenant
a) 50-99,9 moles %, rapportés aux quantités molaires de tous les comonomères, d'un ou de plusieurs composés éthyléniques contenant 1-4 atomes de fluor,
b) 0-49,9 moles %, rapportés aux quantités molaires de tous les comonomères, d'un ou de plusieurs comonomères choisis parmi le groupe comprenant
b1) des alcènes en C₃-C₈ à chaînes droites ou ramifiées contenant au moins un atome de fluor,
b2) des alkyl-vinyléthers contenant au moins un atome de fluor,
b3) des cétones en C₃-C₆ à chaînes ouvertes ou cycliques, contenant des positions α,α' fluorées, et
b4) des alcènes en C₂-C₄ non fluorés, des alkyl (en C₃-C₆) vinyléthers et des esters vinyliques en C₄-C₆
et
c) 0,1-5 moles %, de préférence 0,2-2,5 moles %, de manière particulièrement préférée 0,3-1,5 mole %, rapportés aux quantités molaires de tous les comonomères, d'un ou de plusieurs comonomères choisis parmi le groupe comprenant les alcényl-isocyanurates et les alcényl-cyanurates répondant aux formules 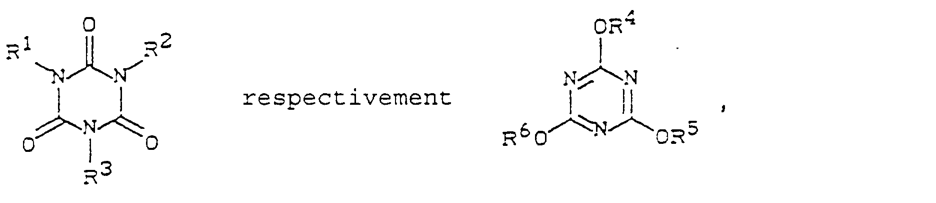
dans lesquelles
R¹, R, R⁴ et R⁵ représentent, indépendamment l'un de l'autre, un groupe alcényle en C₃-C₆ contenant des liaisons doubles terminales, et
R³ et R⁶ représentent, indépendamment l'un de l'autre, un groupe alcényle en C₃-C₆ contenant une liaison double terminale ou encore un groupe alkyle en C₁-C₅.

2. Copolymères selon la revendication 1, caractérisés en ce que le composant a) correspond à un ou plusieurs comonomères choisis parmi le groupe comprenant le fluorure de vinylidène, le tétrafluoréthylène, le chlorotrifluoréthylène et le fluorure de vinyle, et le composant b) correspond à des alcènes fluorés en C₃-C₈.

3. Copolymères selon la revendication 1, caractérisés en ce qu'on met en oeuvre des combinaisons de deux monomères fluorés ou plus, choisies parmi le groupe comprenant le fluorure de vinylidène/hexafluoropropène, le fluorure de vinylidène/tétrafluoréthylène/hexafluoropropène, le tétrafluoréthylène/fluorure de vinylidène/perfluoralkylperfluorovinyléthers, le tétrafluoréthylène/propène, le tétrafluoréthylène/fluorure de vinylidène/hexafluoropropène/pentafluoropropène, le tétrafluoréthylène/fluorure de vinylidène/hexafluoropropène/perfluoralkylperfluorovinyléthers/tétrafluoréthylène/hexafluoropropène/hexafluoroisobutylène, et le fluorure de vinylidène/chlorotrifluoréthylène/hexafluoropropène.

4. Copolymères selon la revendication 1, caractérisés en ce que R¹, R et R³, respectivement R⁴, R⁵ et R⁶ sont identiques et en ce que de préférence R¹ à R⁶ représentent un groupe allyle.

5. Copolymères selon la revendication 1, caractérisés en ce qu'ils contiennent, pour la mise en oeuvre comme précurseurs du caoutchouc, une fraction de 5-45 moles %, de préférence de 10 à 40 moles %, rapportés à la quantité molaire de tous les comonomères, de comonomères du composant b), de préférence des composants b1), b2) et/ou b4).

6. Procédé pour la préparation de copolymères selon la revendication 1, caractérisé en ce qu'on copolymérise les comonomères mentionnés à la revendication 1, par voie radicalaire en solution, en suspension ou en émulsion à des températures de -15°C à +120°C, de préférence de 20 à 90°C, de manière particulièrement préférée de 30 à 80°C, sous pression élevée.

7. Procédé selon la revendication 6, caractérisé en ce qu'on effectue la copolymérisation en émulsion.

8. Procédé selon la revendication 7, caractérisé en ce qu'on met en oeuvre, comme initiateurs radicalaires, des percomposés inorganiques.

9. Procédé selon la revendication 6, caractérisé en ce qu'on dépose au préalable au maximum 0,02-1,5 mole % rapporté aux quantités molaires de tous les comonomères de l'alcénylisocyanurate et/ou de l'alcényl-cyanurate des formules (I), respectivement (II) et on procède à l'addition dosée ultérieure du reste de la quantité prévue de (I), respectivement (II) en fonction de la progression de la polymérisation.

10. Procédé selon la revendication 9, caractérisé en ce qu'on procède à l'addition dosée ultérieure, aussi bien de l'alcényl-isocyanurate et/ou de l'alcényl-cyanurate (I), respectivement (II) que des comonomères fluorés, respectivement des monomères non fluorés qui les remplacent partiellement, en fonction de la progression de la polymérisation.
